(19) 

Europäisches
Patentamt
European
Patent Office
Office européen
des brevets

(11) **EP 4 349 788 A1**

(12) **EUROPEAN PATENT APPLICATION**
published in accordance with Art. 153(4) EPC

(43) Date of publication:
**10.04.2024 Bulletin 2024/15**

(21) Application number: **22811417.9**

(22) Date of filing: **27.05.2022**

(51) International Patent Classification (IPC):
***C01G 49/00*** (2006.01)     ***G03G 9/107*** (2006.01)
***G03G 9/113*** (2006.01)

(52) Cooperative Patent Classification (CPC):
**C01G 49/00; G03G 9/107; G03G 9/113**

(86) International application number:
**PCT/JP2022/021790**

(87) International publication number:
**WO 2022/250149 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2021 JP 2021089755**

(71) Applicant: **Powdertech Co., Ltd.
Kashiwa-shi, Chiba 277-8557 (JP)**

(72) Inventors:
• **YAMASAKI, Yuzuru
Kashiwa-shi, Chiba 277-8557 (JP)**
• **ISHIKAWA, Makoto
Kashiwa-shi, Chiba 277-8557 (JP)**
• **UEMURA, Tetsuya
Kashiwa-shi, Chiba 277-8557 (JP)**

(74) Representative: **Vossius & Partner
Patentanwälte Rechtsanwälte mbB
Siebertstrasse 3
81675 München (DE)**

(54) **FERRITE PARTICLES, CARRIER FOR ELECTROPHOTOGRAPHIC DEVELOPER,
ELECTROPHOTOGRAPHIC DEVELOPER, AND FERRITE PARTICLE PRODUCTION METHOD**

(57)     The present invention provides a ferrite particle having a spinel crystal structure belonging to a space group Fd-3m and having a ferrite composition represented by a specific formula, a carrier for an electrophotographic developer including the ferrite particle and a resin coating layer configured to coat a surface of the ferrite particle, an electrophotographic developer including the carrier for an electrophotographic developer and a toner, and a ferrite particle production method for producing the ferrite particle.

EP 4 349 788 A1

**Description**

TECHNICAL FIELD

The present invention relates to a ferrite particle, a carrier for an electrophotographic developer, an electrophotographic developer, and a ferrite particle production method.

BACKGROUND ART

An electrophotographic developing method refers to a method in which a toner in a developer is adhered to an electrostatic latent image formed on a photoreceptor to develop the electrostatic latent image. The developer used in this method is divided into a two-component developer composed of a toner and a carrier and a one-component developer using only a toner. As a developing method using a two-component developer, a cascade method or the like was adopted in the past, but a magnetic brush method using a magnet roll is currently the mainstream.

In the magnetic brush method, a toner and a carrier are stirred and mixed in a developing box filled with a developer, thereby imparting an electric charge to the toner. Then, the carrier is conveyed to a surface of the photoreceptor by a developing roller that holds a magnet. At this time, the charged toner is conveyed to the surface of the photoreceptor by the carrier. After a toner image is formed on the photoreceptor by an electrostatic action, the carrier remaining on the developing roll is collected again into the developing box, stirred and mixed with a new toner, and repeatedly used for a certain period of time.

Unlike the one-component developer, in the two-component developer, the magnetic properties and the electrical properties of the carrier are designed separately from the toner, and therefore, the controllability at the time of designing the developer is good. Therefore, the two-component developer is suitable for a full-color developing device that requires high image quality, a copying machine or a multifunction printer capable of performing high-speed printing that requires reliability and durability of image maintenance, and the like (hereinafter, referred to as an image forming device).

Incidentally, a continuous image forming speed in a case of continuously forming images using a general image forming device for home use is about 5 sheets/min to 15 sheets/min in a case of A4 size, but a continuous image forming speed of an image forming device for business use is about 15 sheets/min to 50 sheets/min. As described above, the continuous image forming speed of the image forming device for business use is generally higher than the continuous image forming speed of the image forming device for home use, and a start-up speed such as a warm-up time and a first copy time is also higher. In a case where the printing speeds are different, the properties required for a carrier core material are also different.

In a case where the printing speed is increased, the carrier and the toner are stirred and mixed at a high speed in the developing box, and therefore, the carrier core material is easily cracked or chipped. Cracking or chipping of the carrier core material also causes carrier scattering. Therefore, an image forming device for high-speed printing is required to have a carrier core material which has high magnetization and which is hardly cracked or chipped during stirring and mixing. Therefore, as a core material suitable for a carrier used in an image forming device for high-speed printing, for example, Patent Literature 1 proposes a ferrite particle containing, as a main component, a material represented by a composition formula $(M_xFe_{3-x})O_4$ (where M is at least one metal element selected from the group consisting of Fe, Mg, Mn, Ti, Cu, Zn, Sr, and Ni, and $0 \leq X < 1$), a Ca element, and a P element, in which a content of the Ca element with respect to a content of the P element is within a range of 0.45 to 1.0 in terms of weight ratio. The ferrite particle described in Patent Literature 1 prevents a decrease in strength while improving chargeability, thereby suppressing cracking and chipping of the carrier core material.

PRIOR ART DOCUMENT

PATENT LITERATURE

Patent Literature 1: JP2012-144401A

SUMMARY OF INVENTION

OBJECT TO BE ACHIEVED BY THE INVENTION

In recent years, an image forming device that implements a continuous image forming speed of 100 sheets/min or more is also known. In order to implement such a high continuous image forming speed, it is necessary to increase rotation speeds of a photoreceptor and a developing roll. As the rotation speed of the developing roller increases, a centrifugal force acting on a carrier also increases. In a case where a magnetic attraction force acting between the developing roller and the carrier with respect to the centrifugal force acting on the carrier is small, the carrier is scattered from a surface of the developing roller. As a result, the carrier adheres to the surface of the photoreceptor, the toner adheres to an unexpected position of the photoreceptor, and the like, which causes beads carry over and toner scattering. Therefore, in order to implement a high continuous image forming speed, it is required that the entire core material has high magnetization and that a particle having low magnetization is not contained when compared with other particles.

Incidentally, a crystal structure of the ferrite particle varies in a complicated manner depending on a type and an amount of trace components, sintering conditions, and the like. Therefore, in a case of being represented by the same composition formula, the magnetic properties and the like vary when the crystal structure is different. In the invention described in Patent Literature 1, a crystal growth is controlled by balancing the contents of the Ca element and the P element. However, for example, in a ferrite particle having a spinel crystal structure, the magnetic properties vary depending on a type of an element occupying a site B and a valence thereof. In the method described in Patent Literature 1, it is difficult to control up to the type of the element occupying the site B and the valence thereof, and there is a high probability that a particle having low magnetization is contained as compared with other particles. Therefore, beads carry over and toner scattering may not be sufficiently suppressed during high-speed printing.

Therefore, an object of the present invention is to provide a ferrite particle suitable for a carrier core material of an electrophotographic developer, which has magnetic properties suitable for high-speed printing and which has good image properties even during high-speed printing, a carrier for an electrophotographic developer, an electrophotographic developer, and a ferrite particle production method.

MEANS FOR ACHIEVING THE OBJECT

The present invention includes the following aspects.

[1] A ferrite particle having a spinel crystal structure belonging to a space group Fd-3m and having a ferrite composition represented by the following formula (1).

$$(Fe^{3+}u, Mn^{2+}v, Mg^{2+}w)(Mn^{3+}x, Fe^{2+}y, Fe^{3+}z)_2O_4 \ ... \qquad (1)$$

where

$u + v + w = 1$
$x + y + z = 1$
$0.870 \leq v < 1.000$
$0.001 \leq w < 0.070$
$0.000 \leq x \leq 0.075$

[2] The ferrite particle according to [1], in which
w in the formula (1) satisfies the following condition.

$$0.003 \leq w \leq 0.060$$

[3] The ferrite particle according to [1] or [2], in which
when a total substance amount of Fe, Mn, and Mg contained in the ferrite particle is defined as 100 mol, an Sr element is contained in an amount of 0.4 mol or more and 1.2 mol or less in addition to those ferrite constituent elements.

[4] The ferrite particle according to any of [1] to [3], in which
an internal porosity is 4.0% or less.

[5] The ferrite particle according to any of [1] to [4], in which
saturation magnetization by B-H measurement at the time of applying a magnetic field of $3K \cdot 1000/4\pi \cdot A/m$ is 70 $Am^2/kg$ or more and 90 $Am^2/kg$ or less.

[6] The ferrite particle according to any one of [1] to [5], in which
an apparent density is 2.10 $g/cm^3$ or more and 2.40 $g/cm^3$ or less.

[7] A carrier for an electrophotographic developer, including:

the ferrite particle according to any one of [1] to [6]; and
a resin coating layer configured to coat a surface of the ferrite particle.

[8] An electrophotographic developer, including:

the carrier for an electrophotographic developer according to [7]; and
a toner.

[9] The electrophotographic developer according to [8], which is used as a replenishment developer.
[10] A ferrite particle production method for producing the ferrite particle according to any one of [1] to 6, the method including:

blending an Fe raw material, an Mn raw material, and an Mg raw material so that blending amounts thereof satisfy the following formula (2) to prepare an object to be sintered; and
accommodating the object to be sintered in a refractory container having a porosity of 20% or more and 35% or less and sintering the object to be sintered, thereby producing the ferrite particle.

$$2.00 \leq n_{Fe}/(n_{Mn}+n_{Mg}) \leq 3.00 \ ...(2)$$

where

$n_{Fe}$: substance amount (mol%) of Fe element in the Fe raw material
$n_{Mn}$: substance amount (mol%) of Mn element in the Mn raw material
$n_{Mg}$: substance amount (mol%) of Mg element in the Mg raw material

[11] The ferrite particle production method according to [10], in which
the object to be sintered is sintered in a closed atmosphere heat treatment furnace in a state where pressurization is performed so that a furnace internal pressure is higher than an atmospheric pressure outside the furnace in a range of 2 Pa or more and 100 Pa or less.

EFFECTS OF INVENTION

According to the present invention, it is possible to provide a ferrite particle suitable for a carrier core material of an electrophotographic developer, which has magnetic properties suitable for high-speed printing and which is capable of implementing good image properties even during high-speed printing, a carrier for an electrophotographic developer, an electrophotographic developer, and a ferrite particle production method.

EMBODIMENTS FOR CARRYING OUT THE INVENTION

Hereinafter, an embodiment of a ferrite particle, a carrier core material for an electrophotographic developer, a carrier for an electrophotographic developer, and an electrophotographic developer according to the present invention will be described. First, an embodiment of a ferrite particle and a carrier core material for an electrophotographic developer will be described. In the present description, the ferrite particle, the carrier core material for an electrophotographic developer, the carrier for an electrophotographic developer, and the electrophotographic developer each mean an aggregate of individual particles, that is, a powder, unless otherwise specified.
Hereinafter, the ferrite particle according to the present embodiment will be described as being used as a carrier core material for an electrophotographic developer, but the ferrite particle according to the present invention can be used in various applications such as a magnetic ink, a magnetic fluid, various functional fillers such as a magnetic filler, a filler for a bonded magnet, and a filler for an electromagnetic wave shielding material, and an electronic component material, and the application of the ferrite particle is not limited to a carrier core material for an electrophotographic developer.

1. Ferrite Particle

First, the ferrite particle will be described. The ferrite particle has a spinel crystal structure belonging to a space group Fd-3m, and a ferrite composition thereof is represented by the following formula (1).

$$(Fe^{3+}u,Mn^{2+}v,Mg^{2+}w)(Mn^{3+}x,Fe^{2+}y,Fe^{3+}z)_2O_4 \ ... \qquad (1)$$

where

$$u + v + w = 1$$

$$x + y + z = 1$$

$$0.870 \leq v < 1.000$$

$$0.001 \leq w < 0.070$$

$$0.000 \leq x \leq 0.075$$

The spinel crystal belonging to the space group Fd-3m belongs to a cubic system. When the composition of the ferrite having the spinel crystal structure is represented by a general formula $AB_2O_4$, a unit lattice thereof is represented by $8(AB_2O_4)$. 32 oxygen atoms constituting a unit lattice of the spinel crystal form a close-packed cubic lattice. There are two kinds of lattice points where metal ions are arranged in the unit lattice, that is, a position 8b (site A) which is a center position of a tetrahedron constituted by four oxygen atoms and a position 16c (site B) which is a center position of a hexahedron constituted by six oxygen atoms. In a case of an Mn-Mg ferrite, Mg is disposed at the site A as a divalent metal ion.

On the other hand, Fe and Mn are transition metal elements, and thus are disposed at the site A or the site B as divalent or trivalent metal ions. In the case of an Mn-Mg ferrite, "$Fe^{3+}$", "$Mn^{2+}$", and "$Mg^{2+}$" are disposed at the site A, and "$Mn^{3+}$", "$Fe^{2+}$", and "$Fe^{3+}$" are disposed at the site B. It is considered that an occupancy rate of these ions at the site B varies depending on production conditions and the like. Therefore, an electron spin state at the site B greatly affects the magnetic properties of the ferrite particle.

Therefore, as a result of intensive studies by the inventors of the present invention, it has been found that the occupancy rate of "$Mn^{3+}$" at the site B is extremely reduced, and that specifically, when the ferrite composition of the ferrite particle is represented by the above formula (1), a value of "x" representing the occupancy rate of "$Mn^{3+}$" at the site B is suppressed to 0.075 or less, whereby the ferrite particle as a whole has high magnetization and substantially contains no particle having low magnetization, exhibits magnetic properties extremely suitable for high-speed printing of 100 sheets/min or more, and further 120 sheets/min or more, can suppress beads carry over, toner scattering, and the like due to the low-magnetization particle, and can implement good image properties even during high-speed printing. However, in the conventionally known production method, "$Mn^{3+}$" occupies the site B exceeding the value of "x", and variation in the occupancy rate of "$Mn^{3+}$" at the site B is large. Therefore, the above causes variation in magnetization of individual particles, such as inclusion of a particle having low magnetization even when the ferrite particle as a whole (powder body) has high magnetization. Therefore, as a result of intensive studies by the inventors of the present invention, a production method to be described later can be conceived, a ferrite particle having a spinel crystal structure in which in the formula (1), the value of "x" is 0.075 or less and the occupancy rate of "$Mn^{3+}$" at the site B is extremely low is obtained, and the ferrite particle can be accurately produced. Hereinafter, details will be described.

(1) Ferrite Composition

i)             ($Mn^{3+}x$, $Fe^{2+}y$, $Fe^{3+}z$)

"($Mn^{3+}x$, $Fe^{2+}y$, $Fe^{3+}z$)" in the above formula (1) corresponds to "B" in the above general formula. As described above, "x + y + z = 1, $0.000 \leq x \leq 0.075$" is satisfied. "x", "y", and "z" represent occupancy rates of "$Mn^{3+}$", "$Fe^{2+}$", and "$Fe^{3+}$" at the site B, respectively. In the ferrite particle according to the present invention, "$0.000 \leq x \leq 0.075$", and the site B is substantially occupied by "$Fe^{2+}$" or "$Fe^{3+}$". In the ferrite particle having a spinel crystal structure in which penetration of "$Mn^{3+}$" into the site B is suppressed in this way, a ratio of the particle having low magnetization is extremely small. That is, it is possible to obtain a ferrite particle as an aggregate of ferrite single particle which has high magnetization as a whole and which substantially contains no particle having low magnetization, and as a result, has little variation in magnetic properties. The value of "x" is preferably as small as possible, and an upper limit thereof is preferably 0.075, more preferably 0.040, and still more preferably 0.020.

However, in the present description, an upper limit value and a lower limit value of a numerical value range, which are preferable, are preferably replaced with "equality sign-attached inequality sign" in a case of being displayed as "inequality sign" in the formula, and vice versa. In addition, regarding the upper limit value and the lower limit value, which are preferable, "or more" can be replaced with "more than", "or less" can be replaced with "less than", and vice versa.

ii) $(Fe^{3+}u, Mn^{2+}v, Mg^{2+}w)$

On the other hand, "$(Fe^{3+}u, Mn^{2+}v, Mg^{2+}w)$" in the formula (1) corresponds to "A" in the general formula. As described above, "$0.870 \leq v < 1.000, 0.001 \leq w < 0.070$" is satisfied, "u", "v", and "w" indicate occupancy rates of "$Fe^{3+}$", "$Mn^{2+}$", and "$Mg^{2+}$" at the site A, respectively.

By setting the occupancy rate of "$Mn^{2+}$" at the site A to be within the range of "v" in addition to the occupancy rate of "$Mn^{3+}$" at the site B being within the range of "x", a ferrite particle having magnetic properties suitable for high-speed printing can be obtained.

In order to exert the effect, an upper limit of "v" is more preferably less than 1.000, and still more preferably less than 0.998. A lower limit of "v" is more preferably 0.870, still more preferably 0.900, and yet still more preferably 0.960.

When the ferrite composition contains Mn in a range of "2x+v", the magnetization on a low magnetic field side can be increased. Further, the ferrite composition containing Mn can prevent re-oxidation of ferrite during removal from the furnace after sintering. Therefore, it is easy to adjust a resistance value to a good value, and it is easy to obtain charging properties suitable for high-speed printing.

In addition, in a case where the occupancy rate of "$Mg^{2+}$" at the site A is within the above range, it is easy to obtain a ferrite particle having high magnetization and high resistance. Here, when magnesium hydroxide is used as the Mg raw material, a hydroxy group may remain in the ferrite particle in a case where a sintering temperature at the time of producing the ferrite particle is low. Therefore, by blending the Mg raw material such that a value of "w" is less than 0.070, an amount of a residual hydroxy group present due to the raw material can be reduced. Therefore, it is possible to suppress variation of electrical properties such as a charge amount and a resistance of the ferrite particle due to an influence of an atmospheric humidity by the residual hydroxy group, and to improve the environmental dependence of the electrical properties of the ferrite particle.

In order to exert the effect, an upper limit of "w" is more preferably 0.060, still more preferably 0.030, and yet still more preferably 0.020. A lower limit of "w" is more preferably 0.001, and still more preferably 0.003.

As a preferable aspect, it is preferable that $0.003 \leq w \leq 0.060$.

(2) Sr Content

When a total substance amount of Fe, Mn, and Mg contained in the ferrite particle is defined as 100 mol, it is preferable to contain an Sr element in an amount of 0.4 mol or more and 1.2 mol or less in addition to those ferrite constituent elements. By containing Sr in this range, the unevenness of the surface of the ferrite particle can be made to have an appropriate size, variation in unevenness can be suppressed, and peeling or the like of the resin coating layer when carriers collide with each other can be suppressed. In addition, when the unevenness of the surface of the ferrite particle becomes an appropriate size and the surface is coated with a resin to form a carrier, the resistance can be prevented from becoming extremely high. On the other hand, in a case where the Sr content exceeds the above range, chlorine released from the Fe raw material or the like at the time of sintering or the like is adsorbed to an Sr compound precipitated on the surface of the core material, and the charging properties of the ferrite particle are easily affected by the atmospheric humidity. Therefore, the surface resistance of the ferrite particle may decrease in a high-temperature and high-humidity environment, and the chargeability may also decrease. Regarding "containing an Sr element in addition to the ferrite constituent elements", the Sr element is not an element that constitutes the spinel crystal structure, further is not an element that constitutes a ferrite having other crystal structures, such as Sr ferrite, and means to be present in a particle.

In order to exert the effect, a lower limit value of the content of "Sr" is preferably 0.5 mol, and more preferably 0.6 mol. An upper limit thereof is preferably 1.1 mol, and more preferably 1.0 mol.

(3) Composition Analysis

"x" and "y+z" in the above formula (1) are values obtained by subjecting an X-ray diffraction pattern to Rietveld analysis, and "u", "v", and "w" are values obtained by quantifying the elements contained in the ferrite particle by ICP emission spectrometry.

The content of Sr can be obtained by the same procedure as "u", "v", and "w".

Hereinafter, each specific analysis procedure will be described.

i) x and y+z

First, the ferrite particle according to the present invention is sintered at 650°C in an air atmosphere using a rotary kiln to be decomposed into "$Fe_2O_3$" and "$Mn_2O_3$", thereby preparing a specimen. The specimen is subjected to powder X-ray diffraction under measurement conditions to be described later to obtain a powder X-ray diffraction pattern.

Next, the obtained powder X-ray diffraction pattern is subjected to Rietveld analysis to determine a composition ratio of "$MnFe_2O_4$", "$Fe_2O_3$", and "$Mn_2O_3$". A content ratio (mol%) of "$Mn_2O_3$" when "$Fe_2O_3$" and "$Mn_2O_3$" are defined as 100 mol% is determined from the obtained composition ratio. The content ratio of "$Mn_2O_3$" indicates the occupancy rate of "$Mn^{3+}$" at the site B. Accordingly, "x" can be obtained based on the obtained content ratio of "$Mn_2O_3$". Specifically, when the content ratio of "$Mn_2O_3$" is "a (mol%)", "x" can be obtained by "x" = "a" × "1/100".

After the value of "x" is obtained, "y+z" representing a total occupancy rate of "$Fe^{3+}$" and "$Fe^{2+}$" at the site B is obtained from the value of "x".

Since "x + y + z = 1" in the above formula (1), the value of "y+z" can be obtained by "y+z" = "1-x".

Measurement conditions for powder X-ray diffraction and analysis conditions for Rietveld analysis are as follows.

(Powder X-ray Diffraction)

As an X-ray diffractometer, "X'Pert PRO MPD" manufactured by PANalytical Corporation can be used. A Co tube (CoKα ray) can be used as an X-ray source. A focused optical system and a high-speed detector "X'Celarator" can be used as an optical system. Measurement conditions are as follows.

Scanning speed: 0.08 °/sec
Divergence slit: 1.0°
Scattering slit: 1.0°
Receiving slit: 0.15 mm
Voltage and current values of enclosing tube: 40 kV/40 mA
Measurement range: 20 = 15° to 90°
Integration number: 5 times

(Qualitative Analysis of Crystalline Phase)

The crystal structure is assumed as follows from a structure disclosed in "National Research and Development Agency, National Institute for Materials Science, "AtomWork", Internet <URL: http://crystdb.nims.go.jp/> based on measurement results (powder X-ray diffraction pattern) obtained above. In this case, the following three phases (first phase to third) are used as crystal structure models, and the occupancy rate of $Mn^{3+}$ "x" at the site b is obtained from a composition ratio of the following phases in the specimen.

First phase: $MnFe_2O_4$ (spinel crystal phase)

Crystal structure: space group Fd-3m (No. 227-2)
Atomic coordinate: $Mn^{2+}$ (position 8b (3/8,3/8,3/8))

$Fe^{3+}$ (position 16c (0,0,0))
$O^{2-}$ (position 32e (x,x,x))

Second phase: $Fe_2O_3$

Crystal structure: space group R-3c (No. 167-1)
Atomic coordinate: $Fe^{3+}$ (position 12c (0,0,z))
$O^{2-}$ (position 18e (x,0,1/4))

Third phase: $Mn_2O_3$

Crystal structure: space group Ia-3 (No. 206-1)
Atomic coordinate: $Mn^{2+}$ (position 24d (x,0,1/4))

$Mn^{2+}$ (position 8a (0,0,0))
$O^{2-}$ (position 48e (x,y,z))

After the crystal structure is assumed as described above, the following parameters are optimized using analysis software "RIETAN-FP u2.83". As a profile function, the pseudo-Voigt function of Thompson, Cox, Hasting is used, and asymmetrization is performed by the Howard method. In addition, the following parameters are refined so that an Rwp value and an S value representing fitting accuracy are 2% or less and 1.5 or less, respectively.

(Parameters for Refinement)

- Shift factor
- Scale factor
- Background parameter
- Gaussian function U, V, and W
- Lorentz function X and Y
- Asymmetry parameter As
- Lattice constant. oxygen atomic coordinate

ii) u, v, and w

The contents of "Fe", "Mn", "Mg", and "Sr" in the ferrite particle as a specimen are measured under measurement conditions to be described later, and the respective values are obtained as follows from the obtained values.

First, a ratio (mol%) of "Mg" is calculated from the total substance amount (mol) of "Fe", "Mn", and "Mg", and a value of "w" is obtained. "u" and "v" are calculated from the following calculation formula based on the value of "w" and the value of "x" obtained above.

$$u = (1 - w) \times (1 - x)$$

$$v = 1 - u - w$$

(ICP)

A specific measurement method for the contents of "Fe", "Mn", and "Mg" by ICP emission spectrometry is as follows.

First, 0.2 g of the ferrite particle to be measured is weighed. Then, 20 ml of 1N hydrochloric acid and 20 ml of 1N nitric acid are added to 60 ml of pure water, followed by heating, and the ferrite particle is added thereto to prepare an aqueous solution in which the ferrite particle is dissolved. The aqueous solution is used as a specimen, and the contents of Fe, Mn, and Mg can be measured using an ICP emission spectrometer (ICPS-1000IV manufactured by Shimadzu Corporation).

(iii) Content of Sr

The content of Sr is determined in the same manner as u, v, and w. Specifically, when the ferrite particle contains an Sr element, Sr is dissolved in the aqueous solution prepared at the time of performing ICP emission spectrometry. When the contents of Fe, Mn, and Mg are measured using the aqueous solution as described above, the content of the Sr element is also measured at the same time, a substance amount (mol) of "Sr" when the total substance amount (mol) of "Fe", "Mn", and "Mg" is defined as 100 is determined, and the value is defined as the content of Sr (mol).

(4) Internal Porosity

An internal porosity of the ferrite particle is preferably 4.0% or less. Here, the internal porosity refers to a value measured as follows.

The ferrite particle to be measured is embedded in a resin, and cross-section processing is performed by ion milling to prepare a cross-sectional specimen for measurement. The ion milling is performed by using IM4000PLUS, manufactured by Hitachi High-Technologies Corporation under an argon atmosphere at an acceleration voltage of an ion beam of 6.0 kV. Then, a reflection electron image, of the cross-sectional specimen for measurement, of 700 times at an acceleration compaction of 1 kV is photographed with a scanning electron microscope (SU8020 manufactured by Hitachi High-Technologies Corporation), and is analyzed using image analysis software (Image-Pro Plus, manufactured by Media Cybernetics).

Here, the internal porosity is obtained as an average value of 30 particles. The ferrite particle (powder) to be measured is a particle having a maximum diameter Dx in a range of $D_{50} \times 0.8 \leq Dx \leq D_{50} \times 1.2$ when the volume average particle diameter of the ferrite particle (powder) containing the particle to be measured is defined as $D_{50}$. Further, an enveloped particle area (A) is measured for each particle to be measured, the particles being connected by a line enveloping the unevenness of the surfaces thereof, and then a cross-sectional area of the particle included in a particle image thereof is measured as a core material area (B). Then, a value obtained by the following equation using a sum of the enveloped particle areas (A) and a sum of the core material areas (B), which are measured for 30 particles, is defined as the internal porosity as referred in the present invention.

$$\text{INTERNAL POROSITY (\%)}$$
$$= (\text{ENVELOPED PARTICLE AREA (A)} - \text{CORE MATERIAL AREA (B)}) / \text{ENVELOPED PARTICLE AREA (A)} \times 100$$

where

Enveloped particle area (A): area of region surrounded by line (enveloping line) enveloping unevenness of cross-section of particle
Core material area (B): area of core material portion

The internal porosity defined by the above equation is a value indicating a ratio, to the enveloping area, of a sum of a void area continuous from the surface of the particle to be measured in the cross section of the particle and a void area independently present inside the core material.

The ferrite particle having an internal porosity of 4.0% or less obtained as described above means an aggregate of particles having a small void inside the particle, a small variation in unevenness on the particle surface, and a uniform shape. In addition, since the void inside the particle is small, inclusion of a particle having low magnetization as compared with other particles is suppressed, and a ferrite particle having small variation in magnetic properties of individual particles is obtained. In addition, by reducing the internal porosity, a particle having low particle strength can be prevented from being contained. Accordingly, it is easy to suppress carrier scattering caused by a low-magnetization particle or a low-strength particle and to suppress occurrence of image defects such as beads carry over and toner scattering caused by carrier scattering. In addition, it is possible to suppress variation in an image development amount due to presence of the low-magnetization particle.

In order to exert the effect, an upper limit of the internal porosity is preferably 3.5%, more preferably 3.0%, still more preferably 2.5%, and yet still more preferably 2.0%.

(5) Magnetic Properties

Next, the magnetic properties of the ferrite particle will be described. The ferrite particle preferably has saturation magnetization of 70 $Am^2$/kg or more and 90 $Am^2$/kg or less by B-H measurement at the time of applying a magnetic field of 3K·1000/4π·A/m. In a case where the saturation magnetization of the ferrite particle is within the range, a magnetic brush can be rapidly formed, for example, even when a continuous copying speed is increased to 100 sheets/min or more or 120 sheets/min or more. In addition, the magnetic attraction force acting between the developing roller and the carrier is strong, and even when a centrifugal force larger than that in low-speed printing acts on the carrier in accordance with rotation of the developing roller, it is possible to suppress the carrier from separating from the magnetic brush and the carrier from scattering, and to suppress occurrence of beads carry over or toner scattering.

In contrast, in a case where the saturation magnetization is less than 70 $Am^2$/kg, the magnetic force of the carrier with respect to the centrifugal force acting on the carrier may be small when printing is performed at a high continuous copying speed of 100 sheets/min or more, and the magnetic brush may be insufficiently raised, or the scattering of the carrier from the developing roll due to low magnetization may easily occur. In a case where the saturation magnetization exceeds 90 $Am^2$/kg, the saturation magnetization is extremely high, and a height of the magnetic brush may be non-uniform and variation in image development amount may be likely to occur. In addition, the saturation magnetization and an electrical resistance are in a trade-off relation, and as the saturation magnetization of the ferrite particle increases, the electrical resistance thereof decreases. Therefore, in a case where the saturation magnetization of the ferrite particle exceeds 95 $Am^2$/kg, the resistance of the ferrite particle decreases, and carrier scattering due to low resistance may be likely to occur. In order to suppress a decrease in electrical resistance, an upper limit of the saturation magnetization is more preferably 85 Am$^2$/kg, and still more preferably 80 Am$^2$/kg.

The saturation magnetization can be measured using an integration-type B-H tracer BHU-60 (manufactured by Riken Denshi Co., Ltd.). Specifically, a specimen is placed in a 4πI coil, an H coil for magnetic field measurement and a 4πI coil for magnetization measurement are disposed between electromagnets of the device, outputs of the H coil and the 4πI coil in which a current of the electromagnet is varied and a magnetic field H is varied are integrated, and a hysteresis loop is drawn on a recording sheet with an H output as an X axis and the output of the 4πI coil as a Y axis. In this hysteresis curve, the magnetization when the applied magnetic field is 3K·1000/4π·A/m is determined and defined as the saturation magnetization. Measurement conditions are as follows.

Specimen filling amount: about 1 g
Specimen filled cell: inner diameter of 7 mm φ ± 0.02 mm, height of 10 mm ± 0.1 mm
4πI coil: 30 turns

(6) Apparent Density (AD)

An apparent density (AD) of the ferrite particle is preferably 2.10 g/cm$^3$ or more and 2.40 g/cm$^3$ or less. The apparent density referred to herein is a value measured in accordance with JIS Z 2504:2012. In a case where the apparent density of the ferrite particle is within the range, the fluidity required for high-speed printing can be satisfied, and when the ferrite particle is used as a carrier core material for an electrophotographic developer, deterioration of charging properties due to a stirring stress can be suppressed even when the carrier and the toner are stirred at a high speed in a developing box.

In contrast, in a case where the apparent density (AD) of the ferrite particle is less than 2.10 g/cm$^3$, the fluidity of the carrier is low when high-speed printing of 100 sheets/min or more is performed, and it may be difficult to satisfactorily perform stirring with the toner in the developing box, and in addition to the above, the number of the particle having lower magnetization than the level of magnetization required for the ferrite particle increases, and it may be difficult to suppress beads carry over caused by the low magnetization. On the other hand, in a case where the apparent density (AD) of the ferrite particle exceeds 2.40 g/cm$^3$, the charging properties may be deteriorated due to peeling of a resin coating layer to be described later caused by a high-speed stirring stress in the developing box.

In order to exert these effects, the apparent density of the ferrite particle is more preferably 2.15 g/cm$^3$ or more. In addition, the apparent density of the ferrite particle is more preferably 2.35 g/cm$^3$ or less, and still more preferably 2.30 g/cm$^3$ or less.

The apparent density can be measured as follows using a powder apparent density meter. As the powder apparent density meter, a powder apparent density meter including a funnel, a cup, a funnel support, a support rod, and a support base is used. A balance having a maximum weight of 200 g and a minimum weight of 50 mg is used. Then, a value obtained by measurement in the following procedure and calculation in the following manner is defined as the apparent density referred to herein.

i) Measurement Method

(a) The amount of the specimen is at least 150 g or more.
(b) The specimen is poured into a funnel having an orifice with a hole diameter of 2.5 + 0.2/- 0 mm, and is poured into the cup until the sample overflows.
(c) Immediately after the specimen starts to overflow, the inflow of the specimen is stopped, and the specimen raised on the cup is flatly scraped off by a scraper along an upper end of the cup so as not to apply a vibration.
(d) A side surface of the cup is lightly tapped to sink the specimen and to remove the specimen attached to the outside of the cup, and the weight of the specimen in the cup is weighed with an accuracy of 0.05 g.

ii) Calculation

A numerical value obtained by multiplying the measured value obtained in the above (d) by 0.04 is rounded to the second place after the decimal point according to JIS-Z 8401 (method of rounding a numerical value), and is defined as the apparent density in the unit of "g/cm$^3$".

(7) Average Volume Particle Diameter (D$_{50}$)

The average volume particle diameter (D$_{50}$) of the ferrite particle is preferably 20 μm or more and 80 μm or

less. In a case where the volume average particle diameter ($D_{50}$) of the ferrite particle falls within the range, a ferrite particle suitable for various applications can be obtained.

In addition, in a case where the ferrite particle is used as a carrier core material for an electrophotographic developer, the volume average particle diameter ($D_{50}$) of the ferrite particle is preferably 25 $\mu$m or more and 50 $\mu$m or less. Within this range, it is possible to prevent the occurrence of variation in image development amount while suppressing beads carry over.

The average volume particle diameter ($D_{50}$) referred to herein refers to a value measured by a laser diffraction and scattering method in accordance with JIS Z 8825: 2013. Specifically, the volume average particle diameter ($D_{50}$) can be measured as follows by using a Microtrac particle size analyzer (Model 9320-X100), manufactured by Nikkiso Co., Ltd. First, the ferrite particle to be measured is used as a specimen, 10 g of the specimen and 80 ml of water are placed in a 100 ml beaker, 2 drops to 3 drops of a dispersant (sodium hexametaphosphate) are added thereto, followed by performing dispersion for 20 seconds by using an ultrasonic homogenizer (UH-150, manufactured by SMT Co., LTD.) with an output level of 4 to remove bubbles formed on a surface of the beaker, thereby preparing a sample, and a volume average particle diameter of the sample measured by the Microtrac particle size analyzer by using this sample is defined as the average volume particle diameter ($D_{50}$) of the specimen.

2. Carrier for Electrophotographic Developer

Next, the carrier for an electrophotographic developer according to the present invention will be described. The carrier for an electrophotographic developer according to the present invention includes the ferrite particle and the resin coating layer that coats the surface of the ferrite particle. That is, the ferrite particle is used as a carrier core material for an electrophotographic developer. Since the ferrite particle as the carrier core material for an electrophotographic developer is as described above, the resin coating layer will be mainly described here.

(1) Type of Coating Resin

A type of a resin (coating resin) constituting the resin coating layer is not particularly limited. For example, a fluorine resin, an acrylic resin, an epoxy resin, a polyamide resin, a polyamide-imide resin, a polyester resin, an unsaturated polyester resin, a urea resin, a melamine resin, an alkyd resin, a phenol resin, a fluorine acrylic resin, an acrylstyrene resin, or a silicone resin can be used. In addition, a modified silicone resin obtained by modifying a silicone resin or the like with a resin such as an acrylic resin, a polyester resin, an epoxy resin, a polyamide resin, a polyamide-imide resin, an alkyd resin, a urethane resin, or a fluorine resin may be used. For example, the coating resin is preferably a thermosetting resin from the viewpoint of preventing resin peeling due to a mechanical stress received during stirring and mixing with a toner. Examples of the thermosetting resin suitable for the coating resin include an epoxy resin, a phenol resin, a silicone resin, an unsaturated polyester resin, a urea resin, a melamine resin, an alkyd resin, and a resin containing these resins. However, as described above, the type of the coating resin is not particularly limited, and an appropriate coating resin can be appropriately selected according to the type of the toner to be combined, the use environment, and the like.

In addition, the resin coating layer may be formed by using one type of resin, or the resin coating layer may be formed by using two or more types of resins. In a case where two or more types of resins are used, one resin coating layer may be formed by mixing two or more types of resins, or a plurality of resin coating layers may be formed. For example, it is also preferable that a first resin coating layer having good adhesion to the ferrite particle is provided on the surface of the ferrite particle, and a second resin coating layer for imparting desired charge imparting properties to the carrier is provided on a surface of the first resin coating layer.

(2) Resin Coating Amount

An amount of the resin that coats the surface of the ferrite particle (resin coating amount) is preferably 0.1 mass% or more and 10 mass% or less with respect to the ferrite particle used as the core material. In a case where the resin coating amount is less than 0.1 mass%, it is difficult to sufficiently coat the surface of the ferrite particle with the resin, and it may be difficult to obtain a desired charge imparting ability. In addition, in a case where the resin coating amount exceeds 10 mass%, aggregation of carrier particles occurs at the time of production, and the fluidity of the developer in an actual machine or the properties of the developer such as the charge imparting properties to a toner may vary along with a decrease in productivity such as a decrease in yield.

(3) Additive

The resin coating layer may contain an additive such as a conductive agent and a charge control agent for the purpose of controlling the electrical resistance of the carrier, the charge amount, and the charge speed. Examples of the conductive agent include conductive carbon, oxides such as titanium oxide and tin oxide, and various organic conductive agents. However, since the electrical resistance of the conductive agent is low, electric charge leakage is likely to occur in a case where an addition amount of the conductive agent is extremely large. Therefore, a content of the conductive agent is preferably 0.25 mass% or more and 20.0 mass% or less, more preferably 0.5 mass% or more and 15.0 mass% or less, and still more preferably 1.0 mass% or more and 10.0 mass% or less with respect to a solid content of the coating resin.

Examples of the charge control agent include various charge control agents generally used for a toner, and a silane coupling agent. A type of the charge control agent or the coupling agent is not particularly limited, but a charge control agent such as a nigrosine dye, a quaternary ammonium salt, an organic metal complex, or a metal-containing monoazo dye, an aminosilane coupling agent, a fluorine-based silane coupling agent, or the like can be preferably used. A content of the charge control agent is preferably 0.25 mass% or more and 20.0 mass% or less, more preferably 0.5 mass% or more and 15.0 mass% or less, and still more preferably 1.0 mass% or more and 10.0 mass% or less with respect to the solid content of the coating resin.

3. Electrophotographic Developer

Next, an embodiment of the electrophotographic developer according to the present invention will be described. The electrophotographic developer includes the carrier for an electrophotographic developer and a toner.

As the toner constituting the electrophotographic developer, for example, a polymerized toner produced by a polymerization method or a pulverized toner produced by a pulverization method can be preferably used. The toner may contain various additives, and may be any toner as long as it can be used in combination with the carrier as an electrophotographic developer.

A volume average particle diameter ($D_{50}$) of the toner is preferably 2 $\mu$m or more and 15 $\mu$m or less, and more preferably 3 $\mu$m or more and 10 $\mu$m or less. In a case where the volume average particle diameter ($D_{50}$) of the toner is within this range, an electrophotographic developer capable of performing high-quality electrophotographic printing can be obtained.

A mixing ratio of the carrier and the toner, that is, a toner concentration is preferably 3 mass% or more and 15 mass% or less. The electrophotographic developer containing the toner at this concentration can easily obtain a desired image density, and can more favorably prevent fogging and toner scattering.

The electrophotographic developer according to the present invention can also be used as a replenishment developer.

In a case where the electrophotographic developer is used as a replenishment developer, the mixing ratio of the carrier and the toner is preferably 2 parts by mass or more and 50 parts by mass or less with respect to 1 part by mass of the carrier.

The electrophotographic developer can be suitably used in various electrophotographic developing devices to which a magnetic brush developing method is applied in which a carrier is attracted and attached to a magnetic drum or the like by a magnetic force to form a brush shape, and the toner is conveyed and attached to an electrostatic latent image formed on a photoreceptor or the like while applying a bias electric field, thereby forming a visible image. The electrophotographic developer can be used, at the time of applying a bias electric field, not only in an electrophotographic developing device using a DC bias electric field but also in an electrophotographic developing device using an alternating bias electric field in which an AC bias electric field is superimposed on a DC bias electric field.

4. Production Method

Hereinafter, a method for producing the ferrite particle, the carrier core material for an electrophotographic developer, the carrier for an electrophotographic developer, and the electrophotographic developer according to the present invention will be described.

4-1. Ferrite Particle and Carrier Core Material for Electrophotographic Developer

The ferrite particle and the carrier core material for an electrophotographic developer according to the present invention can be produced by a general method for producing a ferrite particle used in applications such as a carrier core material for an electrophotographic developer, except that a raw material mixing step and a sintering step are performed by methods to be described later.

The ferrite particle production method according to the present invention is a ferrite particle production method for producing the ferrite particle, the method including:

blending an Fe raw material, an Mn raw material, and an Mg raw material so that blending amounts thereof satisfy the following formula (2) to prepare an object to be sintered; and

accommodating the object to be sintered in a refractory container having a porosity of 20% or more and 35% or less and sintering the object to be sintered, thereby producing the ferrite particle.

Hereinafter, the raw material mixing step, a pre-sintering step, the sintering step, and a post-sintering step will be described in this order. The pre-sintering step refers to a step performed after the raw material mixing step until a granulated product (precursor of ferrite particle) is obtained. In addition, the post-sintering step refers to steps such as disintegration, classification, and surface oxidation treatment performed after the sintering step.

4-1-1. Raw Material Mixing Step

In the raw material mixing step, the Fe raw material, the Mn raw material, and the Mg raw material are weighed and mixed so as to satisfy the following formula (2), in order to obtain the ferrite particle represented by the above formula (1).

$$2.00 \leq n_{Fe}/(n_{Mn}+n_{Mg}) \leq 3.00...(2)$$

where

$n_{Fe}$: substance amount (mol%) of Fe element in the Fe raw material
$n_{Mn}$: substance amount (mol%) of Mn element in the Mn raw material
$n_{Mg}$: substance amount (mol%) of Mg element in the Mg raw material

By weighing and mixing the Fe raw material, the Mn raw material, and the Mg raw material so as to satisfy the conditional expression (2), the ferrite particle satisfying the formula (1) can be accurately obtained. At this time, the ferrite particle satisfying the above formula (1) can be more accurately obtained by performing the sintering step by the following method.

Here, as the Fe raw material, an iron oxide such as $Fe_2O_3$ can be used. As the Mn raw material, $MnO_2$, $Mn_2O_3$, $Mn_3O_4$, $MnCO_3$, or the like can be used. As the Mg raw material, $MgO$, $Mg(OH)_2$, $MgCO_3$, or the like can be used. Further, in a case where a ferrite particle containing an Sr element is obtained, an oxide or a carbonate of Sr can be used as a raw material. After weighing a predetermined amount of the raw materials, the raw materials are pulverized and mixed by a ball mill, a sand mill, a vibration mill or the like in a wet or dry manner for 1 hour or longer, and preferably 1 hour to 20 hours.

4-1-2. Pre-sintering Step

Next, water is added to a mixture obtained by pulverizing and mixing the raw materials as described above, followed by finely pulverizing using a bead mill or the like to obtain a slurry. A degree of pulverization can be controlled by adjusting a diameter, a composition, and pulverization time of beads used as a media. In order to uniformly disperse the raw materials, it is preferable to use fine beads having a particle diameter of 1 mm or less as a media. In order to uniformly disperse the raw materials, pulverization is preferably performed so that a volume average particle diameter ($D_{50}$) of a pulverized product is 2.5 $\mu$m or less, and more preferably 2.0 $\mu$m or less. In addition, in order to suppress abnormal grain growth, pulverization is preferably performed so that a particle diameter ($D_{90}$) on a coarse side of a particle size distribution is 3.5 $\mu$m or less. A dispersant, a binder, and the like are preferably added to the slurry thus obtained as necessary to adjust a viscosity thereof to 2 poises or more and 4 poises or less. At this time, polyvinyl alcohol or polyvinyl pyrrolidone can be used as the binder.

The slurry prepared as described above is sprayed by using a spray dryer and dried to obtain a granulated product.

Next, it is preferable to classify the granulated product before sintering to remove fine particles contained in the granulated product in order to obtain a ferrite particle having a uniform particle size. Classification of the granulated product can be performed by using known airflow classification, a sieve, or the like.

Incidentally, in a manufacturing process of the ferrite particle, a calcining step of calcining a mixture of raw materials is generally performed before preparing a slurry. In addition, a so-called binder removing step for removing organic components such as a dispersant and a binder from the granulated product is often provided after the granulated product is obtained. However, in order to produce the ferrite particle according to the present invention, it is preferable not to perform the calcining step or the binder removing step. In a case where these heat treatment steps are performed before the sintering step, the mixture of the raw materials is heated, whereby the ferritization reaction proceeds partially. Therefore, the granulated product includes a seed crystal in which crystallization into a spinel structure partially progresses. In a case where such a granulated product is sintered, crystal growth occurs with the seed crystal as a starting point, and thus internal holes are easily generated in the ferrite particle obtained after the sintering. Therefore, the magnetization of the ferrite particle tends to decrease. In addition, in this case, it is difficult to control the crystal growth of each particle to be equivalent in the sintering step, and variation is likely to occur in the size of the internal hole of each particle. Accordingly, in order to obtain a ferrite particle having a low internal porosity and being used for a carrier core material suitable for high-speed printing containing no particle having low magnetization as compared with other particles, it is preferable not to perform a heat treatment such as a calcining step or a binder removing step on a mixed powder of the raw materials or the granulated product under a condition in which a ferritization reaction may proceed before the sintering step.

4-1-3. Sintering Step

In order to obtain the ferrite particle satisfying the above formula (1), the sintering step is preferably performed as follows.

(1) Sintering Furnace

The sintering is preferably performed in a sintering furnace such as a tunnel kiln or an elevator kiln in which a granulated product passes through a hot section in a state of being left to stand in a refractory container such as a saggar or the like, rather than a sintering furnace such as a rotary kiln in which a granulated product flows and passes through a hot section. When the granulated product is sintered in a sintering furnace in which the granulated product passes through the hot section in a state of being left to stand in a refractory container or the like, the inside of the granulated product can be sufficiently sintered, and thus it is easy to obtain a ferrite particle which has high magnetization and high resistance and in which a spinel crystal phase is sufficiently generated.

In addition, by using a closed atmosphere sintering furnace capable of controlling the atmosphere in the furnace, the inside of the furnace can be adjusted to a sintering atmosphere suitable for producing the ferrite particle satisfying the formula (1), and the sintering atmosphere of individual particles in the refractory container can be easily adjusted to be the same. The sintering atmosphere suitable for producing the ferrite particle satisfying the formula (1) will be described later.

For these reasons, it is preferable to use a closed type atmosphere sintering furnace such as a tunnel kiln or an elevator kiln at the time of performing the sintering step.

(2) Refractory Container

As the refractory container, for example, a substantially rectangular container made of a material containing alumina ($Al_2O_3$) as a main component can be used. A container generally referred to as a saggar or the like can be used. In order to produce the ferrite particle satisfying the above formula (1), it is preferable to use a refractory container having a porosity of 20% or more and 35% or less.

Here, the porosity of the refractory container refers to a porosity of open pores communicating with the surface among pores present in a refractory or the like, and is a value obtained by measurement in accordance with a method for measuring the porosity specified in "JIS R 1634: 1998, a method for measuring a density of a sintered body of a fine ceramic and an open pore porosity".

In a case where the refractory container is filled with a granulated product, unevenness may occur in a sintering atmosphere in the refractory container, for example, an oxygen concentration. Therefore, by using a refractory container having a porosity within the above range, it is possible to suppress the occurrence of unevenness in oxygen concentration or the like of the sintering atmosphere in the refractory container while ensuring air permeability between the outside and the inside of the refractory container. Therefore, it is possible to suppress the granulated product from being sintered in a locally different sintering atmosphere (for example, an oxygen-free atmosphere) in the refractory container, and to homogeneously progress a ferritization reaction of each granulated product. As a result, the ferrite particle satisfying the above formula (1) may be produced with high accuracy, and the ferrite particle having small variation in the magnetic properties and the like of the individual particles can be obtained.

In contrast, in a case where the porosity is less than 20%, the atmosphere in the refractory container and the sintering atmosphere in the furnace do not coincide with each other, and even when the sintering atmosphere near an inner wall surface of the refractory container is equivalent to that in the furnace, there is a high probability that the sintering atmosphere at a position near a center in the refractory container is different form the sintering atmosphere in the furnace. Therefore, even in a case where the granulated product is accommodated in the same refractory container in the same furnace to be sintered, the sintering atmosphere differs depending on the position where the granulated product is sintered, and therefore, variation in the progress of the ferritization reaction occurs. Therefore, the occupancy rate of "$Mn^{3+}$" at the site B is higher than that of other particles, and the particle having low magnetization as compared with other particles may be generated. On the other hand, in a case where the porosity exceeds 35%, the durability of the refractory container decreases, which is not preferable.

In order to exert the above effect, a lower limit of the porosity of the refractory container is more preferably 22%, and still more preferably 25%. In addition, an upper limit of the porosity of the refractory container is more preferably 33%, and still more preferably 30%.

(3) Sintering Atmosphere

i) Oxygen Concentration

In order to produce the ferrite particle according to the present invention, the oxygen concentration in the sintering atmosphere is preferably 0.1 vol% (1,000 ppm) or more and 4.0 vol% (40,000 ppm) or less. In a case where sintering is performed in an oxygen-free atmosphere (oxygen concentration of 0.0 vol%), $Mn^{3+}$ easily penetrates the site B, and it is difficult to produce the ferrite particle satisfying the formula (1). In order to produce the ferrite particle satisfying the formula (1), an atmospheric oxygen concentration is more preferably 2.0 vol% (20,000 ppm) or less, and still more preferably 1.0 vol% (10,000 ppm) or less.

ii) Furnace Internal Pressure

In order to produce the ferrite particle according to the present invention, it is preferable that the object to be sintered is sintered in a closed type atmosphere heat treatment furnace in a state where pressurization is performed so that a furnace internal pressure is higher than an atmospheric pressure outside the furnace in a range of 2 Pa or more and 100 Pa or less. By performing sintering in a state where the furnace internal pressure is pressurized with respect to the atmospheric pressure outside the furnace in this manner, atmosphere replacement in the refractory container can be satisfactorily performed, and the atmosphere in the refractory container can be matched with the adjusted atmosphere in the furnace. As a result, it is possible to suppress the granulated product (object to be sintered) from being sintered in locally different sintering atmospheres (for example, oxygen-free atmosphere) in the refractory container, and to adjust the sintering atmospheres of the individual particles to be the same.

The closed type atmosphere sintering furnace is not in a closed state in which the atmosphere outside the furnace and the inside of the furnace (sintering chamber) are isolated from each other, but includes a gas supply port and a gas exhaust port, and the oxygen concentration or the like in the furnace is adjusted to a predetermined condition by supplying an atmosphere adjustment gas such as nitrogen gas into the furnace through the gas supply port and exhausting gas in the furnace through the gas exhaust port. While the granulated product is sintered, gas supply and gas exhaust are continuously performed so that the atmosphere in the furnace is maintained at a predetermined condition. Accordingly, the furnace internal pressure is adjusted to be higher than the atmospheric pressure outside the furnace by a range of 2 Pa or more and 100 Pa or less as described above while performing the gas supply and the gas exhaust so that the oxygen concentration or the like of the atmosphere inside the furnace is maintained at a predetermined condition. That is, it is preferable to perform gas supply so that the oxygen concentration or the like of the atmosphere in the furnace is maintained at a predetermined condition while maintaining the same gas exhaust amount as that in a case where the inside of the furnace is not pressurized.

(4) Sintering Temperature and the like

As a sintering temperature and a sintering time, conditions preferable for producing the ferrite particle having an intended ferrite composition may be adopted. For example, the sintering is preferably performed by holding at a temperature of 850°C or higher for 4 hours or longer and 24 hours or shorter. At this time, it is preferable to hold, for 3 hours or longer, at a temperature (850°C or higher and 1280°C or lower) suitable for producing the ferrite particle having a spinel crystal structure. However, the sintering temperature and the holding time are not particularly limited as long as the ferrite particle having a spinel crystal structure can be obtained.

4-1-4. Post-sintering Step

After the sintering, the sintered product is deagglomerated and classified. As a classification method, the particle size is adjusted to a desired particle diameter by using an existing air classification method, a mesh filtration method, a precipitation method, or the like. In a case where dry recovery is performed, the recovery may be performed by a cyclone or the like. In a case where the particle size is adjusted, two or more types of the above-described classification methods may be selected and performed, and coarse particles and fine particles may be removed by changing the conditions by one classification method.

Further, the ferrite particle after sintering or classification can be subjected to a surface oxidation treatment by heating the surface thereof at a low temperature as necessary, to adjust the surface resistance thereof. The surface oxidation treatment can be performed at 400°C or higher and 730°C or lower, and preferably 450°C or higher and 680°C or lower in an oxygen-containing atmosphere such as air by using a rotary electric furnace, a batch electric furnace, or the like. In a case where the heating temperature during the surface oxidation treatment is lower than 400°C, the surface of the ferrite particle may not be sufficiently oxidized, and desired surface resistance properties may not be obtained. On the other hand, when the heating temperature is higher than 730°C, oxidation proceeds excessively, and the saturation magnetization of the ferrite particle may decrease. In order to uniformly form an oxide film on the surface of the ferrite particle, it is preferable to use a rotary electric furnace. However, the surface oxidation treatment is an optional step.

4-2. Carrier for Electrophotographic Developer

In the carrier for an electrophotographic developer according to the present invention, the above-described ferrite particle is used as a core material, and a resin coating layer is provided on the surface of the ferrite particle. The resin constituting the resin coating layer is as described above. When the resin coating layer is formed on the surface of the ferrite particle, a known method, for example, a brush coating method, a spray drying method using a fluidized bed, a rotary drying method, or a liquid immersion drying method using a universal stirrer can be adopted. In order to improve a ratio of a coating area of the resin to the surface of the ferrite particle (resin coating ratio), it is preferable to adopt a spray drying method using a fluidized bed. In either method, the ferrite particle can be subjected to a resin coating treatment once or a plurality of times. A resin coating liquid used for forming the resin coating layer may contain the additives described above. In addition, the resin coating amount on the surface of the ferrite particle is as described above, and thus the description thereof is omitted here.

After the resin coating liquid is applied to the surface of the ferrite particle, Curing may be performed by an external heating method or an internal heating method as necessary. In the external heating method, a fixed or fluidized electric furnace, a rotary electric furnace, a burner furnace, or the like can be used. In the internal heating method, a microwave furnace can be used. In a case where a UV curable resin is used as the coating resin, a UV heater is used. The Curing is required to be performed at a temperature equal to or higher than a melting point or a glass transition point of the coating resin. In a case where a thermosetting resin, a condensation-crosslinking resin, or the like is used as the coating resin, it is necessary to perform the Curing at a temperature at which curing of the resin sufficiently progresses.

4-3. Electrophotographic Developer

Next, the method for producing the electrophotographic developer according to the present invention will be described.

The electrophotographic developer according to the present invention includes the above-described carrier for an electrophotographic developer and a toner. As described above, both the polymerized toner and the pulverized toner can be preferably used as the toner.

The polymerized toner can be produced by a known method such as a suspension polymerization method, an emulsion polymerization method, an emulsion aggregation method, an ester elongation polymerization method, or a phase transition emulsion method. For example, a colored dispersion liquid in which a colorant is dispersed in water by using a surfactant, a polymerizable monomer, a surfactant, and a polymerization initiator are mixed and stirred in an aqueous medium, the polymerizable monomer is emulsified and dispersed in the aqueous medium, followed by performing polymerization while stirring and mixing, and then a salting agent is added to salt-out a polymer particle. The particle obtained by salting is filtered, washed, and dried to obtain a polymerized toner. Thereafter, an external additive may be added to the dried toner particle as necessary.

Further, in the production of the polymerized toner particle, a toner composition containing a polymerizable monomer, a surfactant, a polymerization initiator, a colorant, and the like is used. The toner composition may blended with a fixability-improving agent and a charge control agent.

As the pulverized toner, for example, a binder resin, a colorant, and a charge control agent are sufficiently mixed with a mixer such as a Henschel mixer, followed by being melt-kneaded with a twin-screw extruder or the like, uniformly dispersed, cooled, finely pulverized with a jet mill or the like, classified, and then classified with a wind classifier or the like to obtain a toner having a desired particle diameter. Wax, a magnetic powder, a viscosity modifier, and other additives may be contained as necessary. Further, an external additive may be added after classification.

EXAMPLES

Next, the present invention will be specifically described with reference to Examples and Comparative Examples. However, the present invention is not limited to the following Examples.

[Example 1]

(1) Ferrite Particle

In Example 1, an MnO raw material, an MgO raw material, an $Fe_2O_3$ raw material, and an SrO raw material were weighed so that a blending ratio was MnO: 46.0 mol%, MgO: 3.0 mol%, $Fe_2O_3$: 51.0 mol%, and SrO: 0.8 mol%. Here, trimanganese tetraoxide was used as the MnO raw material, magnesium oxide was used as the MgO raw material, ferric oxide was used as the $Fe_2O_3$ raw material, and strontium carbonate was used as the SrO raw material. In addition, regarding the above formula (2), $n_{Fe} = 51.0 \times 2 = 102.0$, $n_{Mn} = 46.0$, $n_{Mg} = 3.0$, and $n_{Fe}/(n_{Mn}+n_{Mg}) = 2.08$.

Next, the weighed raw materials were pulverized for 5 hours by a dry media mill (vibration mill, stainless steel beads having a diameter of 1/8 inch), and a slurry binder and a dispersant were added thereto. PVA (polyvinyl alcohol, 20 mass% solution) was used as a binder, and 0.2 mass% of PVA was added to a solid content (raw material amount in a slurry). A polycarboxylic acid dispersant was added as the dispersant to adjust a viscosity of the slurry to 2 poises. Then, the raw materials were granulated and dried by a spray dryer.

Thereafter, a granulated product was held, for 5 hours, in a tunnel-type electric furnace as a closed type atmosphere heat treatment furnace at a sintering temperature (holding temperature) of 1,230°C in an atmosphere having an oxygen concentration of 0.8 vol%, thereby performing sintering on the granulated product. At this time, a heating rate was 150 °C/hour, and a cooling rate was 110 °C/hour. In addition, the granulated product was accommodated in a saggar having a porosity of 20% and sintered.

In addition, an atmosphere gas was introduced from an outlet side of the tunnel-type electric furnace, the inside of the tunnel-type electric furnace was closed, and pressurization was performed so that an internal pressure was 100.0 Pa higher than an atmospheric pressure outside the furnace. An obtained sintered product was deagglomerated by a hammer crusher, which was an impact type pulverizer, and further classified by a gyro shifter using a batch screening method and a turbo classifier into an air flow classification chamber rotary type to adjust the particle size, and a low magnetic product was separated by magnetic separation, thereby obtaining a ferrite particle according to Example 1. Before and after a sintering step, a calcining step and a binder removing step were not performed.

(2) Carrier for Electrophotographic DeveloperThe ferrite particle was used as a core material, and a resin coating layer was formed on a surface of the ferrite particle as described below, thereby obtaining a carrier according to Example 1.

First, a condensed crosslinked silicone resin (weight average molecular weight: about 8,000) containing T units and D units as main components was prepared. In a universal mixing and stirring machine, 2.5 parts by mass of this silicone resin solution (0.5 parts by mass as a silicone resin solid content because a solution having a resin solution concentration of 20 mass% was used, dilution solvent: toluene) and 100 parts by mass of the ferrite particle were mixed and stirred, and a surface of the ferrite particle was coated with the silicone resin while evaporating toluene. After confirming that toluene was sufficiently volatilized, the ferrite particle was taken out of the machine, placed in a container, and subjected to heat treatment in a hot air heating oven at 250°C for 2 hours. Thereafter, the ferrite particle which was cooled to a room temperature and in which the resin on the surface was cured was taken out, aggregation of the particle was released with a 200-mesh vibration sieve, and a non-magnetic matter was removed using a magnetic separator. Thereafter, coarse particles were removed again by a 200-mesh vibration sieve to obtain the carrier for an electrophotographic developer according to Example 1 in which the ferrite particle was used as a core material and a resin coating layer was provided on the surface thereof.

[Example 2]

A ferrite particle according to Example 2 was produced by performing a surface oxidation treatment at 450°C after producing a ferrite particle in the same manner as in Example 1 except that an MnO raw material, an MgO raw material, an $Fe_2O_3$ raw material, and an SrO raw material were weighed so that a blending ratio of the respective raw materials was MnO: 40.0 mol%, MgO: 2.0 mol%, $Fe_2O_3$: 58.0 mol%, and SrO: 1.2 mol%, a sintering temperature was 1,270°C, an atmospheric oxygen concentration during sintering was 1.5 vol%, a furnace internal pressure was pressurized by 10.0 Pa with respect to an atmospheric pressure outside the furnace, and a porosity of a saggar was 35%. A value of the above formula (2) was "2.76". A carrier for an electrophotographic developer according to Example 2 was obtained in the same manner as in Example 1 except that this ferrite particle was used.

[Example 3]

A ferrite particle according to Example 3 was produced in the same manner as in Example 1 except that an MnO raw material, an MgO raw material, an $Fe_2O_3$ raw material, and an SrO raw material were weighed so that a blending ratio of the respective raw materials was MnO: 43.0 mol%, MgO: 0.5 mol%, $Fe_2O_3$: 56.6 mol%, and SrO: 0.8 mol%, a sintering temperature was 1,280°C, an atmospheric oxygen concentration during sintering was 0.5 vol%, a furnace internal pressure was pressurized by 5.0 Pa with respect to an atmospheric pressure outside the furnace, and a porosity of a saggar was 35%. A value of the above formula (2) was "2.60". A carrier for an electrophotographic developer according to Example 3 was obtained in the same manner as in Example 1 except that this ferrite particle was used.

[Example 4]

A ferrite particle according to Example 4 was produced in the same manner as in Example 1 except that an MnO raw material, an MgO raw material, an $Fe_2O_3$ raw material, and an SrO raw material were weighed so that a blending ratio of the respective raw materials was MnO: 40.5 mol%, MgO: 9.0 mol%, $Fe_2O_3$: 50.5 mol%, and SrO: 1.0 mol%, a sintering temperature was 1,250°C, an atmospheric oxygen concentration during sintering was 0.2 vol%, a furnace internal pressure was pressurized by 20.0 Pa with respect to an atmospheric pressure outside the furnace, and a porosity of a saggar was 30%. A value of the above formula (2) was "2.04". A carrier for an electrophotographic developer according to Example 4 was obtained in the same manner as in Example 1 except that this ferrite particle was used.

[Example 5]

A ferrite particle according to Example 5 was produced in the same manner as in Example 1 except that an MnO raw material, an MgO raw material, an $Fe_2O_3$ raw material, and an SrO raw material were weighed so that a blending ratio of the respective raw materials was MnO: 45.0 mol%, MgO: 3.0 mol%, $Fe_2O_3$: 52.0 mol%, and SrO: 0.4 mol%, a sintering temperature was 1,180°C, an atmospheric oxygen concentration during sintering was 1.2 vol%, a furnace internal pressure was pressurized by 50.0 Pa with respect to an atmospheric pressure outside the furnace, and a porosity of a saggar was 30%. A value of the above formula (2) was "2.17". A carrier for an electrophotographic developer according to Example 5 was obtained in the same manner as in Example 1 except that this ferrite particle was used.

[Example 6]

A ferrite particle was produced in the same manner as in Example 1 except that an MnO raw material, an MgO raw material, an $Fe_2O_3$ raw material, and an SrO raw material were weighed so that a blending ratio of the respective raw materials was MnO: 38.0 mol%, MgO: 2.0 mol%, $Fe_2O_3$: 60.0 mol%, and SrO: 0.8 mol%, a sintering temperature was 1,260°C, an atmospheric oxygen concentration during sintering was 0.3 vol%, a furnace internal pressure was pressurized by 2.0 Pa with respect to an atmospheric pressure outside the furnace, and a porosity of a saggar was 35%. A value of the above formula (2) was "3.00". A carrier for an electrophotographic developer according to Example 6 was obtained in the same manner as in Example 1 except that this ferrite particle was used.

[Comparative Example 1]

A ferrite particle according to Comparative Example 1 was produced in the same manner as in Example 1 except that an MnO raw material, an MgO raw material, an $Fe_2O_3$ raw material, and an SrO raw material were weighed so that a blending ratio of the respective raw materials was MnO: 52.0 mol%, MgO: 3.0 mol%, $Fe_2O_3$: 45.0 mol%, and SrO: 0.3 mol%, a sintering temperature was 1,170°C, an atmospheric oxygen concentration during sintering was 0.3 vol%, a furnace internal pressure was pressurized by 190.0 Pa with respect to an atmospheric pressure outside the furnace, and a porosity of a saggar was 5%. A value of the above formula (2) was "1.64". A carrier for an electrophotographic developer according to Comparative Example 1 was obtained in the same manner as in Example 1 except that this ferrite particle was used.

[Comparative Example 2]

A ferrite particle according to Comparative Example 2 was produced in the same manner as in Example 1 except that an MnO raw material, an MgO raw material, an $Fe_2O_3$ raw material, and an SrO raw material were weighed so that a blending ratio of the respective raw materials was MnO: 49.0 mol%, MgO: 2.5 mol%, $Fe_2O_3$: 48.5 mol%, and SrO: 0.8 mol%, a sintering temperature was 1,200°C, an atmospheric oxygen concentration during sintering was 0.2 vol%, a furnace internal pressure was pressurized by 180.0 Pa with respect to an atmospheric pressure outside the furnace, and a porosity of a saggar was 15%. A value of the above formula (2) was "1.88". A carrier for an electrophotographic developer according to Comparative Example 2 was obtained in the same manner as in Example 1 except that this ferrite particle was used.

[Comparative Example 3]

A ferrite particle according to Comparative Example 3 was produced in the same manner as in Example 1 except that an MnO raw material, an MgO raw material, an $Fe_2O_3$ raw material, and an SrO raw material were weighed so that a blending ratio of the respective raw materials was MnO: 51.0 mol%, MgO: 1.9 mol%, $Fe_2O_3$: 47.1 mol%, and SrO: 1.2 mol%, a sintering temperature was 1,220°C, an atmospheric oxygen concentration during sintering was 0.1 vol%, a furnace internal pressure was pressurized by 160.0 Pa with respect to an atmospheric pressure outside the furnace, and a porosity of a saggar was 15%. A value of the above formula (2) was "1.78". A carrier for an electrophotographic developer according to Comparative Example 3 was obtained in the same manner as in Example 1 except that this ferrite particle was used.

[Comparative Example 4]

A ferrite particle according to Comparative Example 4 was produced by performing a surface oxidation treatment at 450°C after producing a ferrite particle in the same manner as in Example 1 except that an MnO raw material, an MgO raw material, an $Fe_2O_3$ raw material, and an SrO raw material were weighed so that a blending ratio of the respective raw materials was MnO: 55.0 mol%, MgO: 0.4 mol%, $Fe_2O_3$: 44.6 mol%, and SrO: 1.3 mol%, a sintering temperature was 1,230°C, an atmospheric oxygen concentration during sintering was 0.3 vol%, a furnace internal pressure was pressurized by 150.0 Pa with respect to an atmospheric pressure outside the furnace, and a porosity of a saggar was 15%. A value of the above formula (2) was "1.61". A carrier for an electrophotographic developer according to Comparative Example 4 was obtained in the same manner as in Example 1 except that this ferrite particle was used.

[Comparative Example 5]

A ferrite particle according to Comparative Example 5 was produced in the same manner as in Example 1 except that an MnO raw material, an MgO raw material, an $Fe_2O_3$ raw material, and an SrO raw material were weighed so that a blending ratio of the respective raw materials was MnO: 41.0 mol%, MgO: 10.2 mol%, $Fe_2O_3$: 48.8 mol%, and SrO: 0.6 mol%, a sintering temperature was 1,170°C, an atmospheric oxygen concentration during sintering was 0.4 vol%, a furnace internal pressure was pressurized by 200.0 Pa with respect to an atmospheric pressure outside the furnace, and a porosity of a saggar was 10%. A value of the above formula (2) was "1.91". A carrier for an electrophotographic developer according to Comparative Example 5 was obtained in the same manner as in Example 1 except that this ferrite particle was used.

[Comparative Example 6]

A ferrite particle according to Comparative Example 6 was produced in the same manner as in Example 1 except that an MnO raw material, an MgO raw material, an $Fe_2O_3$ raw material, and an SrO raw material were weighed so that a blending ratio of the respective raw materials was MnO: 49.0 mol%, MgO: 5.0 mol%, $Fe_2O_3$: 46.0 mol%, and SrO: 0.2 mol%, a sintering temperature was 1,220°C, an atmospheric oxygen concentration during sintering was 0.5 vol%, a furnace internal pressure was pressurized by 105.0 Pa with respect to an atmospheric pressure outside the furnace, and a porosity of a saggar was 18%. A value of the above formula (2) was "1.70". A carrier for an electrophotographic developer according to Comparative Example 6 was obtained in the same manner as in Example 1 except that this ferrite particle was used.

Table 1 shows production conditions of the ferrite particles according to Examples and Comparative Examples.

[Evaluation]

1. Evaluation Method

(1) Composition Analysis

The ferrite particles according to Examples and Comparative Examples are subjected to XRD diffraction, Rietveld analysis, and ICP emission analysis by the methods described above, and are subjected to composition analysis, thereby obtaining values of "u", "v", "w", "x", and "y+z". An Sr content is also as described above. (2) Basic Properties

For the ferrite particles according to Examples and Comparative Examples, (a) the saturation magnetization, (b) the apparent density (AD), and (c) the internal porosity are measured by the methods described above.

(3) Image Quality Properties

An electrophotographic developer is prepared using the carrier for an electrophotographic developer produced in each of Examples and Comparative Examples, and is evaluated for (a) the image density reproducibility, (b) the image density unevenness, (c) the beads carry over, and (d) the toner scattering amount.

The electrophotographic developer is prepared as follows.

18.6 g of the carrier for an electrophotographic developer produced in each of Examples and Comparative Examples and 1.4 g of a toner are stirred and mixed by a ball mill for 10 minutes to produce an electrophotographic developer having a toner concentration of 7.0 mass%. As the toner, a commercially available negative toner (cyan toner for DocuPrintC3530 manufactured by Fuji Xerox Corporation; average volume particle diameter (D50) of about 5.8 $\mu$m) used in a full-color printer is used.

(a) Image Density Reproducibility

The electrophotographic developer prepared as described above is used as a specimen, and the image density reproducibility is determined in accordance with the following criteria using a charge amount measuring device.

As the charge amount measuring device, a magnet roll in which a magnet (magnetic flux density of 0.1 T) is disposed inside a cylindrical aluminum tube (hereinafter, referred to as a sleeve) having a diameter of 31 mm and a length of 76 mm, the magnet including eight poles in total with alternating N and S poles. A cylindrical electrode having a gap of 5.0 mm from the sleeve is disposed at an outer periphery of the sleeve. Further, 0.5 g of the electrophotographic developer as a specimen is uniformly attached to the sleeve, and then with the aluminum tube on an outer side being fixed, a DC voltage of 2,500 V is applied between the electrode on the outer side and the sleeve for 60 seconds while rotating the magnet roller on an inner side at 2,000 rpm, thereby transferring the toner to the cylindrical electrode on the outer side, and a mass of the toner transferred to the electrode on the outer side (toner transfer amount) is measured. An electrometer (insulation resistance meter model 6517A manufactured by KEITHLEY) is used as the cylindrical electrode on the outer side. Then, the image reproducibility is obtained by the following equation. The measurement is repeated 10 times, and an average value thereof is obtained.

$$\text{IMAGE REPRODUCIBILITY (\%)} = (\text{TONER TRANSFER AMOUNT/TONER MASS IN } 0.5 \text{ g OF DEVELOPER}) \times 100$$

Evaluations A to D are performed according to the following determination criteria based on the average value of the image reproducibility obtained for each specimen.

A: 97% or more

B: 95% or more and less than 97%

C: 85% or more and less than 95%

D: less than 85%

(b) Image Density Unevenness

The toner transfer amount is measured in the same manner as in the evaluation on the image reproducibility, and is used as an evaluation value for evaluating the image density unevenness for each specimen by the following equation based on a maximum toner transfer amount, a minimum toner transfer amount, and an average value among the 10 measured values. A lower evaluation value indicates smaller image density unevenness.

EVALUATION VALUE OF IMAGE DENSITY UNEVENNESS =

(MAXIMUM TONER TRANSFER AMOUNT - MINIMUM TONER TRANSFER AMOUNT) / AVERAGE VALUE

OF TONER TRANSFER AMOUNT × 100 (%)

Evaluations A to D are performed according to the following criteria based on the evaluation value obtained for each specimen.

A: less than 0.5%

B: 0.5% or more and less than 1.5%

C: 1.5% or more and less than 2.5%

D: 2.5% or more

(c) Beads carry over

The beads carry over is evaluated as follows using the electrophotographic developer prepared as described above as a specimen.

A charge amount measuring device same as the charge amount measuring device used for evaluating the image reproducibility and the like is used, 1 g of the electrophotographic developer is uniformly attached to the sleeve, and then with the aluminum tube on the outer side being fixed, a DC voltage of 2,500 V is applied between the electrode on the outer side and the sleeve for 90 seconds while rotating the magnet roller on the inner side at 2,000 rpm, thereby transferring the toner to the cylindrical electrode on the outer side. After 90 seconds elapse, the applied voltage is cut off, the rotation of the magnet roll is stopped, then the electrode on the outer side is removed, and the number of carrier particles attached together with the toner transferred to the electrode is measured. Evaluations A to D are performed according to the following criteria based on the measured number of carrier particles.

A: The number of the attached carrier particles is less than 20.
B: The number of the attached carrier particles is 20 or more and less than 40.
C: The number of the attached carrier particles is 40 or more and less than 50.
D: The number of the attached carrier particles is 50 or more.

(d) Toner Scattering Amount

A magnet roll in which a magnet (magnetic flux density of 0.1 T) including eight poles with alternating N poles and S poles is disposed and a bristle cutting plate provided via a gap of 1.0 mm from the magnet roll are installed, and a measurement unit of a particle counter is installed at a position of 50 mm from the bristle cutting plate that is in contact with a developer, thereby obtaining a toner scattering amount measuring device. In order to prevent the toner scattering due to the influence of the outside air from occurring and the measured value from varying, the toner scattering amount is measured in a clean room of class 1,000 at 20°C ± 5°C and 50% ± 5%. In the measurement on the toner scattering amount, particles having a particle diameter of 5 $\mu$m among particles attached to the bristle cutting plate while the magnet roll is rotated at 2,000 rpm for 10 minutes are counted as an object to be counted, the number of particles per minute (number of particles per 1 L of volume) is obtained from the integrated number of particles, and the evaluations A to D are performed based on the following criteria.

A: less than 500/L
B: 500/L or more and less than 1,000/L
C: 1,000/L or more and less than 1,600/L
D: 1,600/L or more

In the above evaluation method, evaluation closer to an actual state of image quality properties by an electrophotographic developer can be performed as compared with an actual machine evaluation in which the image reproducibility, the image density unevenness, the beads carry over, and the toner scattering amount are evaluated by an actual machine (image forming device). In recent years, the performance of an actual machine or an electrophotographic developer has been improved, and for example, in an actual machine at a continuous copying speed of about 50 sheets/min, there may be almost no difference in printing. In addition, variation may occur in an evaluation result due to a model of the actual machine used in a test or aged deterioration of the actual machine itself. On the other hand, measurement conditions can be strictly controlled according to an alternative evaluation by the charge amount measuring device as described above, and a width of one evaluation zone can be increased as compared with a case of the actual machine evaluation. Further, in the above alternative evaluation, a rotation speed of the magnet roll is set to an extremely high speed of 2,000 rpm. Therefore, it is possible to more precisely evaluate the image quality properties of the electrophotographic developer when printing is performed using an actual machine having a high continuous copying speed of 120 sheets/min or more.

2. Evaluation Results

Table 2 shows composition analysis results of Examples and Comparative Examples. In addition, Table 3 shows basic properties and image quality properties of Examples and Comparative Examples.

(1) Composition

According to the results shown in Table 2, it is confirmed that a ferrite particle according to each Example having a spinel crystal structure belonging to a space group Fd-3m and having a ferrite composition satisfying the above formula (1) (($Fe^{3+}u$, $Mn^{2+}v$, $Mg^{2+}w$) ($Mn^{3+}x$, $Fe^{2+}y$, $Fe^{3+}z$)$_2O_4$, $u + v + w = 1$, $x + y + z = 1$, $0.870 \leq v < 1.000$, $0.001 \leq w < 0.070$, $0.000 \leq x \leq 0.075$) is produced by blending respective raw materials so that blending amounts of the Fe raw material, the Mn raw material, and the Mg raw material are such that the value of the above formula (2) ($n_{Fe}/(n_{Mn}+n_{Mg})$) is 2.00 or more and 3.00 or less to prepare a granulated product, accommodating the granulated product in a refractory container having a porosity of 20% or more and 35% or less, and sintering the granulated product.

On the other hand, the value of "x" exceeds 0.075 in all of the ferrite particles according to Comparative Examples, and the ferrite particle according to the present invention cannot be obtained under the production conditions of each Comparative Example. The value of "x" represents the occupancy rate of "$Mn^{3+}$" at the site B as described above. Here, a blending ratio of MnO is 41.0 mol% in Comparative Example 5, which is lower than those of the other Comparative Examples in terms of a blending ratio of the Mn raw material. However, the value of "x" is "0.013" in Example 6 (MnO: 38 mol%) in which the blending ratio of MnO is smaller than that in Comparative Example 5, whereas the value of "x" is as large as "0.170" in Comparative Example 5. In addition, it is confirmed that among Comparative Examples, the values of "x" in Comparative Example 2, Comparative Example 3, Comparative Example 4, and Comparative Example 6, in which the blending ratio of MnO is larger than that in Comparative Example 5, are smaller than that in Comparative Example 5. Therefore, it is confirmed that the ferrite particle having the ferrite composition represented by the formula (1) cannot be obtained simply by decreasing the blending ratio of the Mn raw material.

Incidentally, in the ferrite particle according to the present invention, the value of "v" representing the occupancy rate of $Mn^{2+}$ at the site A is within a range of "$0.870 \leq v < 1.000$". In order to obtain a ferrite particle in which the value of "v" is within the range, it is necessary to set an Mn amount to "2x+v" when the blending ratio of the Mn raw material is determined in producing the ferrite particle. All of the other Comparative Examples except for Comparative Example 5 have a larger blending ratio of MnO than each Example. However, the value of "v" in each Comparative Example is smaller than the range defined in the present invention. Therefore, it is confirmed that only by determining the blending ratio of the Mn raw material so that "v" falls within the range defined in the present invention, the value of "x" does not fall within the range defined in the present invention, and as a result of $Mn^{3+}$ penetrating the site B, it is difficult to set the value of "v" within the range defined in the present invention.

That is, as a result of intensive studies by the inventors of the present invention, it has been found that, by using a saggar (refractory container) of which the porosity is within the above range and which is used at the time of sintering a granulated product while blending the Fe raw material, the Mn raw material, and the Mg raw material so that the blending amounts satisfy the formula (2), penetration of $Mn^{3+}$ into the site B can be suppressed, and a ferrite particle in which the values of "x" and "v" are within the range defined in the present invention can be obtained with high accuracy. A reason why the penetration of $Mn^{3+}$ into the site B can be suppressed by this method is considered as follows.

First, by determining the blending ratio of each raw material such that the ratios of the Mn element, the Fe element, and the Mg element satisfy the formula (2) at the time of producing a granulated product, the ratio of the Fe element can be set higher than the ratio of the Mn element in the granulated product. That is, the blending of the raw materials is an Fe-rich condition. Then, by sintering the granulated product made of a Fe-rich mixture, the site B is preferentially occupied by $Fe^{2+}$ or $Fe^{3+}$ during a ferritization reaction, and it is easy to suppress the penetration of $Mn^{3+}$

into the site B. In particular, in Example 2, Example 3, and Example 6 in which the value of the formula (2) is "2.76", "2.60", and "3.00", respectively, the value of the formula (2) is larger than that of the other Examples, and it is confirmed that a ferrite particle having a small value of "x" is easily obtained by setting the blending of the raw materials to the Fe-rich condition.

Further, by using a saggar having a porosity within a predetermined range at the time of sintering the granulated product, it is possible to suppress the occurrence of the oxygen concentration unevenness or the like in the sintering atmosphere in the saggar while ensuring the air permeability between the outside and the inside of the saggar. Therefore, it is easy to set the entire region in the saggar to a sintering atmosphere suitable for producing the ferrite particle satisfying the above formula (1). That is, it is possible to suppress the sintering atmosphere from locally varying in the saggar and becoming a sintering condition in which $Mn^{3+}$ easily penetrates the site B. Further, since the granulated product can be sintered in a state where the sintering atmosphere in the saggar is uniform, the ferritization reaction of each granulated product can be homogeneously progressed. Accordingly, it is considered that the ferrite particle satisfying the above formula (1) may be produced with high accuracy, and the ferrite particle having small variation in the magnetic properties and the like of the individual particles can be obtained. At this time, it is preferable that the porosity of the saggar is high within the above range, and it is confirmed that in Examples 1 to 6, a ferrite particle having a small value of "x" is more likely to be obtained when the porosity of the saggar is higher.

Further, by pressurizing the furnace internal pressure with respect to the atmospheric pressure outside the furnace, it is easy to set the atmosphere inside the saggar to the same condition as the atmosphere inside the furnace, and a ferrite particle satisfying the above formula (1) can be produced with higher accuracy. However, it is not preferable that the difference between the furnace internal pressure and the atmospheric pressure outside the furnace is large, and it is preferable that the pressurization is slightly performed in the range defined in the present invention (2 Pa or more and 100 Pa or less) as shown in Examples. It is confirmed that the degree of the pressurization is preferably 50.0 Pa or less, more preferably 20.0 Pa or less, and still more preferably 10.0 Pa or less while using a saggar having a high porosity. That is, it is considered that by controlling the atmospheric pressure in the furnace not to be extremely high while maintaining the gas supply to the furnace and the gas exhaust from the furnace, it is easy to set the sintering atmosphere of each granulated product in the saggar to the same condition, and it is possible to suppress local generation of particles having different values of "x".

No peak showing an Sr ferrite is observed in a powder X-ray diffraction pattern. Therefore, it is also confirmed that Sr is not present as a ferrite constituent element in the ferrite particles according to Examples and Comparative Examples.

(2) Basic Properties

Next, the basic properties of Examples and Comparative Examples will be compared based on Table 3. It is confirmed that the ferrite particles according to Examples 1 to 6 of the present invention have high saturation magnetization of 70 $Am^2$/kg to 86 $Am^2$/kg, an apparent density of 2.14 g/$cm^3$ to 2.31 g/$cm^3$, and an internal porosity within a range of 1.3% to 4.0%. On the other hand, the ferrite particles according to Comparative Examples 1 to 6 have saturation magnetization of 60 $Am^2$/kg to 72 $Am^2$/kg, an apparent density of 1.91 g/$cm^3$ to 2.24 g/$cm^3$, and an internal porosity within a range of 2.9% to 5.8%.

Although some of the ferrite particles according to Examples show the same values as those of Comparative Examples, it can be said that the ferrite particles according to Examples as a whole tend to have high magnetization, large apparent density, and small internal porosity. A relation between the value of "x" and the physical properties thereof is considered as follows. First, in a case where the value of "x" in the above formula (1), that is, the occupancy rate of $Mn^{3+}$ at the site B is different even when the content ratio of each element in the ferrite particle is the same, an electron spin state at the site B is different, and as described above, the magnetic properties are greatly affected, and as the value of "x" is smaller, a ferrite particle having high magnetization is easily obtained. Accordingly, it is considered that the ferrite particles according to Examples having a small value of "x" have a higher saturation magnetization value than the ferrite particles according to Comparative Examples.

In addition, in a case where the value of "x" in the above formula (1) is different even when the content ratio of each element in the ferrite particle is the same, the values of "y+z", "u", and "v" are also different, and thus growth rates of respective crystal grains are also different. For example, in a case where the growth rates of the respective crystal grains are different at the time of sintering a spherical granulated powder, the spherical shape cannot be maintained, and the particle shape may be distorted. In addition, in a case where the crystal grains abnormally grow, the grains may have a shape in which a part thereof protrudes, or in a case where there is a part in which crystal growth is slower than that in the other parts, the part may be recessed to form particles having an irregular shape. In a case where particles having different particle shapes are included as described above, voids between particles in the powder body become large. Therefore, the apparent density decreases. In addition, in a case where the crystal grains abnormally grow, internal voids are likely to occur, and the internal porosity also increases. It is considered that in a case where the sintering atmosphere is locally varied in the saggar at the time of sintering, particles having a value of "x" different from other particles are generated, and the apparent density decreases and the internal porosity increases. In such a case, it is considered that the value of the saturation magnetization is lower than the value assumed only from the value of "x".

Therefore, regarding Examples and Comparative Examples, the porosity and the atmospheric pressure of the saggar are appropriately controlled, and therefore, it is considered that a correlation between the value of "x" and the "saturation magnetization" is high.

On the other hand, the control is not sufficient in Comparative Examples, and therefore, it is considered that "x" and "v" deviate from the range defined in the present invention, the correlation between the value of "x" and the "saturation magnetization" decreases due to factors such as a decrease in the apparent density and an increase in the internal porosity, and for example, although the value of "x" in Comparative Example 6 indicates "0.108" which is a low value as compared with other Comparative Examples, the saturation magnetization indicates a low value of 64 $Am^2/kg$.

(3) Image Properties

According to Table 3, when an electrophotographic developer using the ferrite particle according to the present examples as the carrier core material is used, a high evaluation "A" or "B" is obtained for "image density reproducibility", "image density unevenness", "beads carry over", and "toner scattering amount" in the alternative evaluation assuming a high continuous copying speed of 120 sheets/min or more. In particular, an evaluation "A" is obtained for all items of the ferrite particle according to Example 3, and it is confirmed that the ferrite particle is a carrier core material extremely suitable for an electrophotographic developer suitable for high-speed printing. On the other hand, regarding Comparative Examples except for Comparative Example 4, an evaluation "A" or "B" is obtained for the two items of "image density reproducibility" and "image density unevenness" similarly to Examples of the present invention. However, a low evaluation "C" or "D" is obtained for both of the "beads carry over" and the "toner scattering amount".

A reason why a particularly significant difference occurs in the beads carry over is considered as follows. It is considered that the ferrite particle according to the present examples has high magnetization, and a proportion of the particle having low magnetization is extremely small even as individual particles. On the other hand, the ferrite particles according to Comparative Examples have a high value of "x", and it is considered that as compared with the ferrite particles according to the present examples, the ferrite particle as a whole has low magnetization and a proportion of the particle having low magnetization as individual particles is high. As a result, the same evaluation as that of the present examples is also obtained for the "image density reproducibility" and the "image density unevenness" when high-speed printing is performed, but when the rotation speed of the magnet roll is set to an extremely high speed of 2,000 rpm in the above-described alternative evaluation, the magnetic force acting between the magnet roll and the ferrite particle is small with respect to the centrifugal force acting on each particle in a case where the ferrite particles according to Comparative Examples are used as the carrier core material, and it is considered that the number of particles separating from the magnet roll is increased.

The toner scattering occurs due to low magnetization of the carrier core material or insufficient charging of the toner. In a case where the carrier core material has low magnetization, the toner may be scattered together with the carrier as the carrier is scattered from the magnet roll. In addition, when the toner is insufficiently charged, an electrostatic binding force between the toner and the carrier is small, and only the toner may be scattered as the magnet roll rotates. Since the ferrite particles according to Comparative Examples have low magnetization as compared with the ferrite particles according to Examples, the carrier is easily scattered from the magnet roll as described above, and thus the toner scattering amount is increased. In addition, it can be said that the ferrite particle having a large value of "x" is a mixed powder composed of a plurality of kinds of ferrite particles having different values of "x". Charging when different kinds of particles having different crystal structures are in frictional contact with each other is lower than that when the same kind of particles having the same crystal structure are in frictional contact with each other. The ferrite particles according to Comparative Examples have a larger value of "x" than the ferrite particles according to Examples. Therefore, the ferrite particle having a small value of "x" and the ferrite particle having a large value of "x" are more likely to come into contact with each other in the ferrite particles according to Comparative Examples, and it is considered that when the carrier and the toner are mixed and stirred, insufficient charging of a part of the toner occurs, and toner scattering due to scattering of only the toner from the magnet roll also occurs. On the other hand, the ferrite particles according to Examples have high magnetization and can suppress local insufficient charging, and therefore, it is considered that an evaluation "A" or "B" is obtained for the toner scattering amount.

Table 1]

| | Blending ratio (mol%) | | | | Formula (2) | Sintering temperature | Sintering atmosphere | Furnace internal pressure※ | Porosity | Surface oxidation treatment |
|---|---|---|---|---|---|---|---|---|---|---|
| | MnO | MgO | $Fe_2O_3$ | SrO | $n_{Fe}/(n_{Mn}+n_{Mg})$ | (°C) | ($O_2$ vol%) | (Pa) | (%) | (°C) |
| Example 1 | 46.0 | 3.0 | 51.0 | 0.8 | 2.08 | 1,230 | 0.8 | 100.0 | 20 | - |
| Example 2 | 40.0 | 2.0 | 58.0 | 1.2 | 2.76 | 1,270 | 1.5 | 10.0 | 35 | 450 |
| Example 3 | 43.0 | 0.5 | 56.6 | 0.8 | 2.60 | 1,280 | 0.5 | 5.0 | 35 | - |
| Example 4 | 40.5 | 9.0 | 50.5 | 1.0 | 2.04 | 1,250 | 0.2 | 20.0 | 30 | - |
| Example 5 | 45.0 | 3.0 | 52.0 | 0.4 | 2.17 | 1,180 | 1.2 | 50.0 | 30 | - |
| Example 6 | 38.0 | 2.0 | 60.0 | 0.8 | 3.00 | 1,260 | 0.3 | 2.0 | 35 | - |
| Comparative example 1 | 52.0 | 3.0 | 45.0 | 0.3 | 1.64 | 1,170 | 0.3 | 190.0 | 5 | - |
| Comparative example 2 | 49.0 | 2.5 | 48.5 | 0.8 | 1.88 | 1,200 | 0.2 | 180.0 | 15 | - |
| Comparative example 3 | 51.0 | 1.9 | 47.1 | 1.2 | 1.78 | 1,220 | 0.1 | 160.0 | 15 | - |
| Comparative example 4 | 55.0 | 0.4 | 44.6 | 1.3 | 1.61 | 1,230 | 0.3 | 150.0 | 15 | 450 |
| Comparative example 5 | 41.0 | 10.2 | 48.8 | 0.6 | 1.91 | 1,170 | 0.4 | 200.0 | 10 | - |
| Comparative example 6 | 49.0 | 5.0 | 46.0 | 0.2 | 1.70 | 1,220 | 0.5 | 105.0 | 18 | - |

※ The furnace internal pressure indicates a pressurized portion with respect to the atmospheric pressure outside the furnace.

[Table 2]

|  | Site A | | | Site B | | XRD (mol%) | | ICP (mol%) | | | ICP (mol) |
|---|---|---|---|---|---|---|---|---|---|---|---|
|  | u | v | w | x | y+z | $Mn_2O_3$ | $Fe_2O_3$ | Mn | Mg | Fe | Sr |
| Example 1 | 0.073 | 0.907 | 0.020 | 0.075 | 0.93 | 7.5 | 92.5 | 30.47 | 1.95 | 67.58 | 0.76 |
| Example 2 | 0.027 | 0.960 | 0.012 | 0.028 | 0.97 | 2.8 | 97.2 | 25.30 | 1.24 | 73.45 | 1.14 |
| Example 3 | 0.000 | 0.997 | 0.003 | 0.000 | 1.00 | 0.0 | 100.0 | 27.44 | 0.28 | 72.28 | 0.79 |
| Example 4 | 0.033 | 0.908 | 0.060 | 0.035 | 0.97 | 3.5 | 96.5 | 26.89 | 5.98 | 67.13 | 0.93 |
| Example 5 | 0.070 | 0.910 | 0.019 | 0.072 | 0.93 | 7.2 | 92.8 | 29.60 | 1.93 | 68.47 | 0.39 |
| Example 6 | 0.013 | 0.975 | 0.012 | 0.013 | 0.99 | 1.3 | 98.7 | 23.73 | 1.22 | 75.04 | 0.74 |
| Comparative example 1 | 0.181 | 0.799 | 0.021 | 0.184 | 0.82 | 18.4 | 81.6 | 35.84 | 2.06 | 62.10 | 0.30 |
| Comparative example 2 | 0.151 | 0.833 | 0.016 | 0.153 | 0.85 | 15.3 | 84.7 | 32.99 | 1.62 | 65.39 | 0.71 |
| Comparative example 3 | 0.157 | 0.831 | 0.012 | 0.159 | 0.84 | 15.9 | 84.1 | 34.68 | 1.25 | 64.07 | 1.13 |
| Comparative example 4 | 0.134 | 0.863 | 0.003 | 0.134 | 0.87 | 13.4 | 86.6 | 38.04 | 0.27 | 61.70 | 1.25 |
| Comparative example 5 | 0.159 | 0.773 | 0.068 | 0.170 | 0.83 | 17.0 | 83.0 | 27.54 | 6.85 | 65.61 | 0.54 |
| Comparative example 6 | 0.104 | 0.862 | 0.034 | 0.108 | 0.89 | 10.8 | 89.2 | 33.55 | 3.42 | 63.03 | 0.15 |

[Table 3]

|  | Saturation magnetization ($Am^2$/kg) | AD (g/$cm^3$) | Porosity (%) | Image density reproducibility | Image density unevenness | Beads carry over | Toner scattering amount |
|---|---|---|---|---|---|---|---|
| Example 1 | 71 | 2.31 | 3.5 | A | A | B | A |
| Example 2 | 74 | 2.29 | 2.2 | B | B | A | A |
| Example 3 | 83 | 2.22 | 1.3 | A | A | A | A |
| Example 4 | 73 | 2.21 | 2.3 | B | A | A | B |
| Example 5 | 70 | 2.16 | 3.6 | A | A | B | B |
| Example 6 | 86 | 2.14 | 4.0 | A | B | A | A |
| Comparative example 1 | 67 | 2.15 | 4.7 | A | A | C | D |
| Comparative example 2 | 72 | 2.24 | 4.3 | A | A | D | C |
| Comparative example 3 | 72 | 2.14 | 3.9 | B | A | C | C |
| Comparative example 4 | 70 | 2.19 | 2.9 | C | C | D | C |
| Comparative example 5 | 60 | 1.91 | 5.8 | A | A | D | D |
| Comparative example 6 | 64 | 2.09 | 4.2 | A | A | D | C |

INDUSTRIAL APPLICABILITY

According to the present invention, it is possible to provide a ferrite particle having magnetic properties suitable for high-speed printing and good image properties even during high-speed printing, a carrier for an electrophotographic developer, and an electrophotographic developer.

The present invention has been described in detail with reference to specific embodiments, but it is apparent to those skilled in the art that various changes and modifications can be made without departing from the spirit and scope of the present invention.

The present application is based on the Japanese patent application No. 2021-089755 filed on May 28, 2021, and the contents thereof are incorporated herein by reference.

## Claims

1. A ferrite particle having a spinel crystal structure belonging to a space group Fd-3m and having a ferrite composition represented by the following formula (1):

$$(Fe^{3+}u, Mn^{2+}v, Mg^{2+}w)(Mn3^{+}x, Fe^{2+}y, Fe^{3+}z)_2O_4 \dots \qquad (1)$$

wherein

$$u + v + w = 1$$

$$x + y + z = 1$$

$$0.870 \leq v < 1.000$$

$$0.001 \leq w < 0.070$$

$$0.000 \leq x \leq 0.075.$$

2. The ferrite particle according to claim 1, wherein
w in the formula (1) satisfies the following condition:

$$0.003 \leq w \leq 0.060.$$

3. The ferrite particle according to claim 1 or 2, wherein
when a total substance amount of Fe, Mn and Mg contained in the ferrite particle is defined as 100 mol, an Sr element is contained in an amount of 0.4 mol or more and 1.2 mol or less in addition to the ferrite constituent elements.

4. The ferrite particle according to any one of claims 1 to 3, wherein
an internal porosity is 4.0% or less.

5. The ferrite particle according to any one of claims 1 to 4, wherein
saturation magnetization by B-H measurement at a time of applying a magnetic field of $3K \cdot 1000/4\pi \cdot A/m$ is 70 $Am^2/kg$ or more and 90 $Am^2/kg$ or less.

6. The ferrite particle according to any one of claims 1 to 5, wherein
an apparent density is 2.10 $g/cm^3$ or more and 2.40 $g/cm^3$ or less.

7. A carrier for an electrophotographic developer, comprising:

the ferrite particle according to any one of claims 1 to 6; and
a resin coating layer which coats a surface of the ferrite particle.

8. An electrophotographic developer, comprising:

   the carrier for an electrophotographic developer according to claim 7; and
   a toner.

9. The electrophotographic developer according to claim 8, which is used as a replenishment developer.

10. A ferrite particle production method for producing the ferrite particle according to any one of claims 1 to 6, the method comprising:

    blending an Fe raw material, an Mn raw material, and an Mg raw material so that blending amounts thereof satisfy the following formula (2) to prepare an object to be sintered; and
    accommodating the object to be sintered in a refractory container having a porosity of 20% or more and 35% or less and sintering the object to be sintered, thereby producing the ferrite particle:

$$2.00 \leq n_{Fe}/(n_{Mn}+n_{Mg}) \leq 3.00 \ ...(2)$$

   wherein

   $n_{Fe}$: substance amount (mol%) of Fe element in the Fe raw material
   $n_{Mn}$: substance amount (mol%) of Mn element in the Mn raw material
   $n_{Mg}$: substance amount (mol%) of Mg element in the Mg raw material.

11. The ferrite particle production method according to claim 10, wherein
    the object to be sintered is sintered in a closed type atmosphere heat treatment furnace in a state where pressurization is performed so that an internal pressure of the furnace is higher than an atmospheric pressure outside the furnace in a range of 2 Pa or more and 100 Pa or less.

## INTERNATIONAL SEARCH REPORT

International application No.

**PCT/JP2022/021790**

| A. | CLASSIFICATION OF SUBJECT MATTER |
|---|---|

*C01G 49/00*(2006.01)i; *G03G 9/107*(2006.01)i; *G03G 9/113*(2006.01)i
FI:   C01G49/00 A; G03G9/107 321; G03G9/113 352

According to International Patent Classification (IPC) or to both national classification and IPC

| B. | FIELDS SEARCHED |
|---|---|

Minimum documentation searched (classification system followed by classification symbols)

C01G49/00; G03G9/107; G03G9/113

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2013-137455 A (POWDERTECH CO LTD) 11 July 2013 (2013-07-11) claims, examples, tables, paragraph [0079], etc. | 1-11 |
| A | WO 2019/198304 A1 (POWDERTECH CO LTD) 17 October 2019 (2019-10-17) claims, examples, etc. | 1-11 |
| A | JP 2015-93817 A (DOWA ELECTRONICS MATERIALS CO) 18 May 2015 (2015-05-18) claims, examples, etc. | 1-11 |
| A | JP 2011-107286 A (DOWA ELECTRONICS MATERIALS CO) 02 June 2011 (2011-06-02) claims, examples, etc. | 1-11 |
| A | JP 2011-118380 A (CANON INC) 16 June 2011 (2011-06-16) claims, examples, etc. | 1-11 |
| P, X | WO 2021/200172 A1 (POWDERTECH CO LTD) 07 October 2021 (2021-10-07) claims, examples, tables, etc. | 1-11 |
| P, X | JP 2021-88487 A (POWDERTECH CO LTD) 10 June 2021 (2021-06-10) claims, examples, etc. | 1-11 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **22 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/021790**

| Patent document cited in search report | | | Publication date (day/month/year) | Patent family member(s) | Publication date (day/month/year) |
|---|---|---|---|---|---|
| JP | 2013-137455 | A | 11 July 2013 | (Family: none) | |
| WO | 2019/198304 | A1 | 17 October 2019 | (Family: none) | |
| JP | 2015-93817 | A | 18 May 2015 | (Family: none) | |
| JP | 2011-107286 | A | 02 June 2011 | (Family: none) | |
| JP | 2011-118380 | A | 16 June 2011 | US 2011/0111337 A1 claims, examples | |
| WO | 2021/200172 | A1 | 07 October 2021 | (Family: none) | |
| JP | 2021-88487 | A | 10 June 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012144401 A
- JP 2021089755 A